# DEMANDE DE BREVET EUROPEEN

(11) **EP 2 657 074 A1**
(43) Date de publication de la demande: **30.10.2013**
(21) Numéro de dépôt: 13165008.7
(22) Date de dépôt: 23.04.2013
(51) Int. Cl.: B60N 2/48

(54) **Dispositif de montage d un appui-tête sur un dossier de siège de véhicule automobile**

(30) Priorité: 24.04.2012 FR 1253762
(71) Demandeur: CENTRE D'ETUDE ET DE RECHERCHE POUR L'AUTOMOBILE (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un dispositif (1) de montage d'un appui-tête sur un dossier de siège de véhicule automobile, ledit dispositif comprenant : une tige (2) métallique comprenant au moins un cran (3) latéral de blocage ; une gaine (4) de réception de ladite tige en coulissement présentant une section horizontale transversale s'élargissant progressivement de bas en haut, ladite gaine comprenant une saillie (5) interne latérale de crantage, la section transversale basse de ladite gaine correspondant à celle de ladite tige, de sorte que ladite gaine puisse débattre angulairement et transversalement, autour de son extrémité basse, par rapport à ladite tige, ladite gaine comprenant une zone (6) d'appui haute ; un support (7) de montage de ladite gaine agencé pour permettre un débattement angulaire transversal de ladite gaine, autour de l'extrémité basse dudit support, entre une position de crantage et une position de coulissement ; un moyen ressort (8) actionnant ladite gaine vers sa position de crantage, la mise de ladite gaine en position de coulissement se faisant par pression de l'utilisateur sur ladite zone d'appui à l'encontre dudit moyen ressort.

## Description

L'invention concerne un dispositif de montage d'un appui-tête sur un dossier de siège de véhicule automobile, une gaine et une douille d'un tel dispositif.

Il est connu de réaliser un dispositif de montage d'un appui-tête sur un dossier de siège de véhicule automobile, ladite tige comprenant au moins un cran de blocage en coulissement, ledit dispositif comprenant ladite tige, une gaine de réception de ladite tige en coulissement et, solidaire de ladite gaine, un tiroir à base de matériau plastique moulé monté mobile en translation radiale, ledit tiroir étant contraint en translation par un moyen de rappel élastique, ledit tiroir présentant une saillie agencée pour pouvoir s'engager, sous l'effet dudit moyen de rappel, dans ledit cran lorsqu'ils sont en regard l'un de l'autre pour bloquer ladite tige en coulissement.

Un tel agencement est complexe, puisque requérant la mise en oeuvre d'un tiroir de blocage du coulissement de la tige.

L'invention a pour but de pallier cet inconvénient en proposant un dispositif de réalisation simplifiée.

A cet effet, et selon un premier aspect, l'invention propose un dispositif de montage d'un appui-tête sur un dossier de siège de véhicule automobile, ledit dispositif comprenant :
- une tige métallique destinée à être associée audit appui-tête, ladite tige comprenant au moins un cran latéral de blocage,
- une gaine de réception de ladite tige en coulissement, ladite gaine présentant une section horizontale transversale s'élargissant progressivement de bas en haut, ladite gaine comprenant une saillie interne latérale de crantage pouvant s'introduire dans ledit cran, la section transversale basse de ladite gaine correspondant à celle de ladite tige, de sorte que ladite gaine puisse débattre angulairement et transversalement, autour de son extrémité basse, par rapport à ladite tige, ladite gaine comprenant une zone d'appui haute,
- un support de montage de ladite gaine, ledit support étant destiné à être associé en haut dudit dossier, ledit support étant agencé pour permettre un débattement angulaire transversal de ladite gaine, autour de l'extrémité basse dudit support, entre une position de crantage, où ladite saillie s'insère dans ledit cran, et une position de coulissement, où ladite saillie se dégage dudit cran, de manière à permettre un coulissement de ladite tige dans ladite gaine,
- un moyen ressort actionnant ladite gaine vers sa position de crantage, la mise de ladite gaine en position de coulissement se faisant par pression de l'utilisateur sur ladite zone d'appui à l'encontre dudit moyen ressort.

Dans cette description, les termes de positionnement dans l'espace (haut, bas, longitudinal, transversal, latéral, vertical, horizontal, inférieur, supérieur,...) sont pris en référence au dispositif en place dans le véhicule.

Les termes « diamétralement » et « axialement » sont quant à eux considérés relativement à la tige.

Avec l'agencement proposé, on supprime le tiroir, la fonction de blocage de la tige étant assurée par la saillie intégrée à la gaine.

Selon d'autres aspects, l'invention propose une gaine et une douille d'un tel dispositif.

D'autres particularités et avantages de l'invention apparaîtront dans la description qui suit, faite en référence aux figures jointes dans lesquelles :

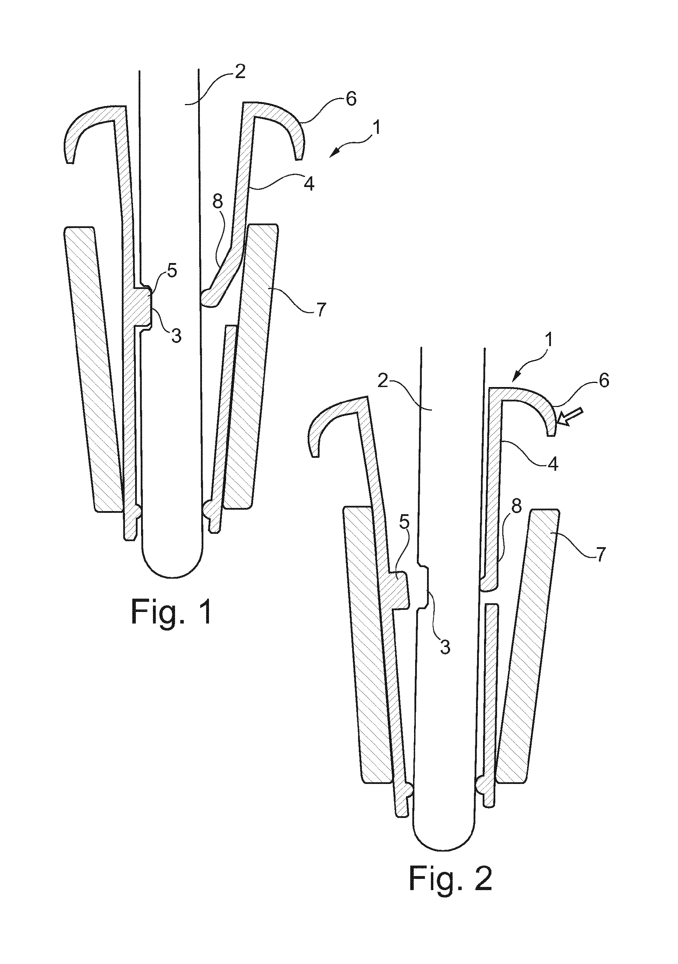

- la figure 1 est une vue schématique partielle en coupe verticale transversale d'un dispositif selon une réalisation, la saillie de crantage étant insérée dans un cran de la tige,
- la figure 2 est analogue à la figure 1, la saillie étant extraite du cran par pression exercée par un utilisateur sur la zone d'appui,
- la figure 3 est analogue à la figure 1, la tige étant en coulissement dans la gaine, la saillie étant éloignée axialement du cran,
- la figure 4 est analogue à la figure 1, la vue étant réalisée en coupe verticale longitudinale.

En référence aux figures, on décrit un dispositif 1 de montage d'un appui-tête sur un dossier de siège de véhicule automobile, non représenté, ledit dispositif comprenant :
- une tige 2 métallique destinée à être associée audit appui-tête, ladite tige comprenant au moins un cran 3 latéral de blocage,
- une gaine 4 de réception de ladite tige en coulissement, ladite gaine présentant une section horizontale transversale s'élargissant progressivement de bas en haut, ladite gaine comprenant une saillie 5 interne latérale de crantage pouvant s'introduire dans ledit cran, la section transversale basse de ladite gaine correspondant à celle de ladite tige, de sorte que ladite gaine puisse débattre angulairement et transversalement, autour de son extrémité basse, par rapport à ladite tige, ladite gaine comprenant une zone 6 d'appui haute,
- un support 7 de montage de ladite gaine, ledit support étant destiné à être associé en haut dudit dossier, ledit support étant agencé pour permettre un débattement angulaire transversal de ladite gaine, autour de l'extrémité basse dudit support, entre une position de crantage, où ladite saillie s'insère dans ledit cran, et une position de coulissement, où ladite saillie se dégage dudit cran, de manière à permettre un coulissement de ladite tige dans ladite gaine,
- un moyen ressort 8 actionnant ladite gaine vers sa position de crantage, la mise de ladite gaine en position de coulissement se faisant par pression de l'utilisateur sur ladite zone d'appui à l'encontre dudit moyen ressort.

Selon la réalisation représentée, le support 7 est sous forme d'une douille, ladite douille présentant une section horizontale transversale s'élargissant progressivement de bas en haut, la section transversale basse de ladite douille correspondant à celle de la gaine 4, de sorte que ladite gaine puisse débattre angulairement et transversalement, autour du bas de ladite douille.

Selon une variante non représentée, le support 7 est formé de deux orifices inférieur et supérieur pratiqués dans l'armature métallique du dossier, l'orifice inférieur présentant une section transversale correspondant à celle de la gaine 4 et l'orifice supérieur présentant une section horizontale transversale supérieure à celle de ladite gaine, de sorte que ladite gaine puisse débattre angulairement et transversalement, autour dudit orifice inférieur.

Selon la réalisation représentée, le moyen ressort 8 est sous forme d'une lame élastique solidaire de la gaine 4, ladite lame étant disposée de façon diamétralement opposée à la saillie 5, ladite lame saillant vers l'intérieur de ladite gaine de manière à s'appuyer contre la tige 2 et à provoquer l'insertion de ladite saillie dans le cran 3 lorsqu'ils sont en vis à vis.

Selon la réalisation représentée, la lame est moulée d'un bloc avec la gaine, notamment en bi injection.

D'autres variantes de réalisation peuvent être envisagées : lame métallique surmoulée par la gaine, lame métallique montée sur la gaine,...

Selon une réalisation non représentée, le moyen ressort 8 est disposé diamétralement du côté de la saillie 5 entre la gaine 4 et le support 7, ledit moyen étant comprimé de manière à repousser ladite saillie vers la tige 2 et à provoquer l'insertion de ladite saillie dans le cran 3 lorsqu'ils sont en vis à vis.

Selon un mode de cette réalisation, le moyen ressort 8 comprend une lame élastique solidaire de la gaine 4.

Diverses variantes de réalisation peuvent encore être envisagées : lame moulée d'un bloc avec la gaine - notamment en bi injection -, lame métallique surmoulée par la gaine, lame métallique montée sur la gaine,...

Selon un autre mode de cette réalisation, le moyen ressort 8 comprend une lame élastique solidaire du support 7, ladite lame étant montée sur ledit support.

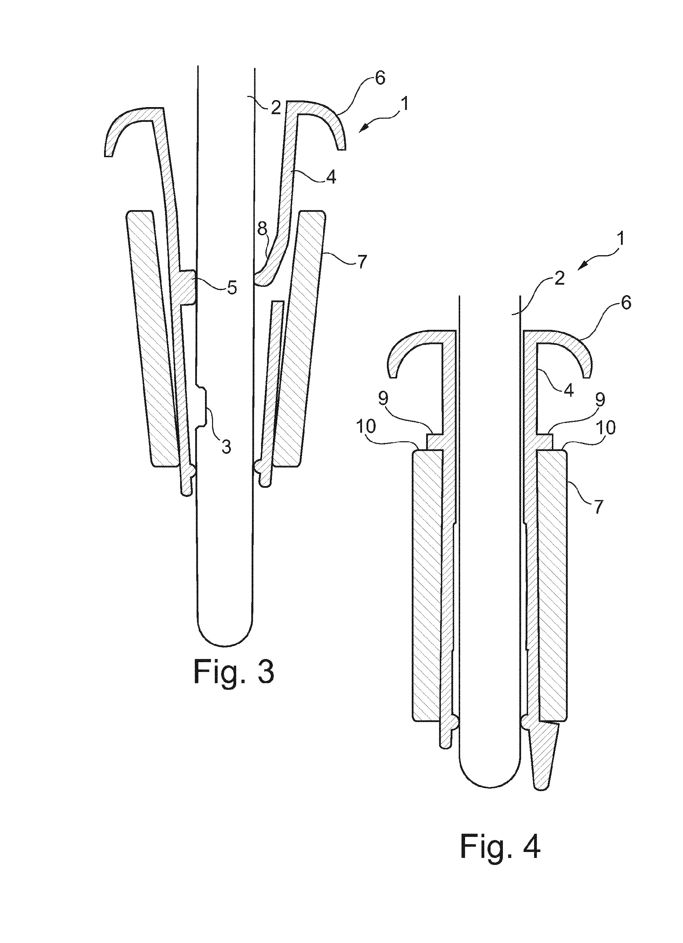

Comme représenté en figure 4, la section horizontale longitudinale de la gaine 4 est sensiblement constante de bas en haut, la section horizontale longitudinale du support 7 en bas et en haut étant analogue à celle de ladite gaine, de sorte que ladite gaine ne puisse pas débattre angulairement et longitudinalement dans ledit support.

Ainsi, lorsque la tête de l'occupant vient heurter l'appui-tête, la tige 2 est fermement maintenue selon une direction longitudinale.

Comme représenté en figure 4, la gaine 4 comprend des butées 9 hautes disposées de façon diamétralement opposées selon une section verticale longitudinale, lesdites butées étant agencées pour coopérer avec des bordures 10 hautes respectives du support 7 pour empêcher un mouvement vers le bas de ladite gaine une fois logée dans ledit support.

De façon non représentée les bordures 10 sont en arc de cercle de façon à être en contact permanent avec les butées 9 pour toute position de débattement angulaire de la gaine 4 par rapport au support 7.

De façon non représentée, le dispositif 1 peut comprendre en outre une deuxième tige destinée à être associée audit appui-tête et s'insérant dans une deuxième gaine, ladite gaine étant de section horizontale constante de bas en haut, de manière à ne pas pouvoir débattre horizontalement par rapport à ladite tige, ladite gaine étant logée dans un deuxième support de section horizontale analogue à celle de ladite gaine en bas et en haut, de manière à ne pas pouvoir débattre angulairement par rapport audit support.

On décrit à présent une gaine 4 d'un dispositif 1, ladite gaine présentant une section horizontale transversale s'élargissant progressivement de bas en haut, ladite gaine comprenant une saillie 5 interne latérale de crantage destinée à s'introduire dans un cran 3 de tige.

On décrit enfin une douille 7 d'un dispositif 1, ladite douille présentant une section horizontale transversale s'élargissant progressivement de bas en haut, de manière à permettre un débattement angulaire transversal d'une gaine 4 logée dedans.

## Revendications

1. Dispositif (1) de montage d'un appui-tête sur un dossier de siège de véhicule automobile, ledit dispositif comprenant :
• une tige (2) métallique destinée à être associée audit appui-tête, ladite tige comprenant au moins un cran (3) latéral de blocage,
• une gaine (4) de réception de ladite tige en coulissement, ladite gaine présentant une section horizontale transversale s'élargissant progressivement de bas en haut, ladite gaine comprenant une saillie (5) interne latérale de crantage pouvant s'introduire dans ledit cran, la section transversale basse de ladite gaine correspondant à celle de ladite tige, de sorte que ladite gaine puisse débattre angulairement et transversalement, autour de son extrémité basse, par rapport à ladite tige, ladite gaine comprenant une zone (6) d'appui haute,
• un support (7) de montage de ladite gaine, ledit support étant destiné à être associé en haut dudit dossier, ledit support étant agencé pour permettre un débattement angulaire transversal de ladite gaine, autour de l'extrémité basse dudit support, entre une position de crantage, où ladite saillie s'insère dans ledit cran, et une position de coulissement, où ladite saillie se dégage dudit cran, de manière à permettre un coulissement de ladite tige dans ladite gaine,
• un moyen ressort (8) actionnant ladite gaine vers sa position de crantage, la mise de ladite gaine en position de coulissement se faisant par pression de l'utilisateur sur ladite zone d'appui à l'encontre dudit moyen ressort.

2. Dispositif selon la revendication 1, **caractérisé en ce que** le support (7) est sous forme d'une douille, ladite douille présentant une section horizontale transversale s'élargissant progressivement de bas en haut, la section transversale basse de ladite douille correspondant à celle de la gaine (4), de sorte que ladite gaine puisse débattre angulairement et transversalement, autour du bas de ladite douille.

3. Dispositif selon la revendication 1 ou 2, **caractérisé en ce que** le moyen ressort (8) est sous forme d'une lame élastique solidaire de la gaine, ladite lame étant disposée de façon diamétralement opposée à la saillie (5), ladite lame saillant vers l'intérieur de ladite gaine de manière à s'appuyer contre la tige (2) et à provoquer l'insertion de ladite saillie dans le cran (3) lorsqu'ils sont en vis à vis.

4. Dispositif selon la revendication 1 ou 2, **caractérisé en ce que** le moyen ressort (8) est disposé diamétralement du côté de la saillie (5) entre la gaine (4) et le support, ledit moyen étant comprimé de manière à repousser ladite saillie vers la tige (2) et à provoquer l'insertion de ladite saillie dans le cran (3) lorsqu'ils sont en vis à vis.

5. Dispositif selon la revendication 4, **caractérisé en ce que** le moyen ressort (8) est sous forme d'une lame élastique.

6. Dispositif selon l'une quelconque des revendications 1 à 5, **caractérisé en ce que** la section horizontale longitudinale de la gaine (4) est constante de bas en haut, la section horizontale longitudinale du support (7) en bas et en haut étant analogue à celle de ladite gaine, de sorte que ladite gaine ne puisse pas débattre angulairement et longitudinalement dans ledit support

7. Dispositif selon l'une quelconque des revendications 1 à 6, **caractérisé en ce que** la gaine (4) comprend des butées (9) hautes disposées de façon diamétralement opposées selon une section verticale longitudinale, lesdites butées étant agencées pour coopérer avec des bordures (10) hautes respectives du support (7) pour empêcher un mouvement vers le bas de ladite gaine une fois logée dans ledit support, lesdites bordures étant en arc de cercle de façon à être en contact permanent avec lesdites butées pour toute position de débattement angulaire de ladite gaine par rapport audit support.

8. Dispositif selon l'une quelconque des revendications 1 à 7, **caractérisé en ce qu'il** comprend en outre une deuxième tige destinée à être associée audit appui-tête et s'insérant dans une deuxième gaine, ladite gaine étant de section horizontale constante de bas en haut, de manière à ne pas pouvoir débattre horizontalement par rapport à ladite tige, ladite gaine étant logée dans un deuxième support de section horizontale analogue à celle de ladite gaine en bas et en haut, de manière à ne pas pouvoir débattre angulairement par rapport audit support.

9. Gaine (4) d'un dispositif selon l'une quelconque des revendications 1 à 8, **caractérisée en ce qu'**elle présente une section horizontale transversale s'élargissant progressivement de bas en haut, ladite gaine comprenant une saillie (5) interne latérale de crantage destinée à s'introduire dans un cran (3) de tige.

10. Douille d'un dispositif selon l'une quelconque des revendications 2 à 8, **caractérisée en ce qu'**elle présente une section horizontale transversale s'élargissant progressivement de bas en haut, de manière à permettre un débattement angulaire transversal d'une gaine (4) logée dedans.
